**Europäisches Patentamt**

**(19) European Patent Office**

**Office européen des brevets**

(11) Numéro de publication : **0 140 450 B1**

(12) **FASCICULE DE BREVET EUROPÉEN**

(45) Date de publication du fascicule du brevet :
09.08.89

(21) Numéro de dépôt : 84201542.2

(22) Date de dépôt : 25.10.84

(51) Int. Cl.⁴ : **G 01 S 7/52, G 01 S 7/62, G 01 S 15/02**

(54) **Procédé et appareil d'exploration de milieux par échographie ultrasonore.**

(30) Priorité : 28.10.83 FR 8317282

(43) Date de publication de la demande :
08.05.85 Bulletin 85/19

(45) Mention de la délivrance du brevet :
09.08.89 Bulletin 89/32

(84) Etats contractants désignés :
BE DE FR GB SE

(56) Documents cités :
EP--A-- 0 043 158
EP--A-- 0 064 399
EP--A-- 0 077 585
EP--A-- 0 091 768
EP--A-- 0 106 409
US--A-- 4 057 049
US--A-- 4 176 658
US--A-- 4 202 215
1976 ULTRASONICS SYMPOSIUM PROCEEDINGS IEEE CATALOGUE NUMBER 76 CH 1120-5SU, pages 44-47, New York, US; R. KUCH et al.: "Parametric estimation of the acoustic attenuation coefficient slope for soft tissue"
ULTRASONIC IMAGING, vol. 5, no. 1, janvier 1983, pages 17-21, Academic Press, Inc., New York, US; P.A. NARAYANA et al.: "A closed form method for the measurement of attenuation in nonlinearly dispersive media"
JOURNAL OF THE ACOUSTICAL SOCIETY OF AMERICA, vol. 69, no. 6, juin 1981, pages 1838-1840, New York, US; Y. HAYAKAWA et al.: "Multifrequency echoscopy for quantitative acoustical characterization of living tissue"

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**BE DE GB SE**

(72) Inventeur : **Cardoso, Jean-François**
**Société Civile S.P.I.D. 209 rue de l'Université**
**F-75007 Paris (FR)**
Inventeur : **Fink, Mathias**
**Société Civile S.P.I.D. 209 rue de l'Université**
**F-75007 Paris (FR)**
Inventeur : **Hottier, François**
**Société Civile S.P.I.D. 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

EP 0 140 450 B1

## Description

La présente invention concerne un procédé d'exploration de milieux par échographie ultrasonore, comportant l'émission répétée de signaux ultrasonores, la réception des échos ultrasonores correspondant aux obstacles principaux rencontrés dans leur direction de propagation par les signaux émis, la séparation des signaux reçus en un nombre n de bandes de fréquence sensiblement égales et jointives pour couvrir approximativement toutes les fréquences des signaux reçus, la détermination de l'enveloppe des signaux dans chaque bande de fréquence, et la multiplication de chacun de ces signaux-enveloppes par un signal de correction pour compenser l'effet de diffraction.

L'invention concerne également, pour la mise en oeuvre d'un tel procédé, un appareil d'exploration de milieux par échographie ultrasonore, comportant au moins un transducteur ultrasonore associé à un étage d'émission pour assurer l'émission répétée de signaux ultrasonores et à un étage de réception pour assurer la réception des échos ultrasonores correspondant aux obstacles principaux rencontrés dans leur direction de propagation par les signaux émis, ledit étage de réception comprenant :

(A) un amplificateur recevant le signal de sortie du transducteur ;

(B) un ensemble de n voies en parallèle les unes sur les autres en sortie de l'amplificateur, comprenant elles-mêmes chacune successivement ;

(1) un filtre passe-bande, l'ensemble des n filtres ainsi prévus étant tel que leurs bandes passantes respectives sont sensiblement égales et jointives pour couvrir approximativement la bande passante du transducteur ;

(2) un détecteur d'enveloppe, identique dans chaque voie et comprenant un redresseur suivi d'un filtre passe-bas ;

(3) un circuit de multiplication, qui reçoit sur une première entrée le signal de sortie du détecteur d'enveloppe correspondant et sur une deuxième entrée un signal de correction assurant la compensation de l'effet de diffraction et délivré par une mémoire commandée par un circuit d'horloge, ledit circuit d'horloge étant lui-même déclenché par l'horloge de l'étage d'émission ;

(C) en sortie des n voies, un circuit de traitement arithmétique qui, à partir des n signaux de sortie de ces voies fournit une information relative aux caractéristiques d'atténuation du milieu exploré. Un tel appareil est utilisable par exemple dans le domaine du contrôle non destructif des matériaux et pour l'exploration de tissus biologiques.

Lorsque des signaux ultrasonores traversent des milieux tels que des tissus biologiques, leur atténuation dans ces milieux varie selon la fréquence, ce qui entraîne des modifications du spectre énergétique du signal échographique. Dans la communication « A closed form method for the measurement of attenuation in non-linearly dispersive media », Ultrasonic Imaging 5, 17-21 (1983), il est mis en évidence que ces changements peuvent pour des milieux dispersifs non linéaires être reliés quantitativement à des paramètres caractéristiques du milieu exploré, à savoir le coefficient différentiel d'atténuation ultrasonore β et l'exposant r (différent de 1) qui caractérise la loi de variation non linéaire de l'atténuation en fonction de la fréquence. Les vérifications expérimentales entreprises montrent malheureusement que cette méthode de détermination de β et de r n'est pas très précise.

Le but de l'invention est donc de proposer un procédé et un appareil d'exploration de milieux par échographie ultrasonore avec lequel il est réellement possible de relier quantitativement et de façon significative le signal échographique aux paramètres β et r du milieu exploré.

A cet effet, le procédé selon l'invention est caractérisé en ce qu'on détermine le logarithme de chaque signal-enveloppe ainsi corrigé, lequel logarithme est une fonction linéaire du temps, après quoi, à partir des fonctions linéaires ainsi obtenues, on procède aux opérations suivantes :

(a) la pente de chacune de ces n fonctions est déterminée ;

(b) la valeur de la pente pour chaque voie est convertie sous forme logarithmique ;

(c) un tableau ou une courbe est établi pour donner la correspondance entre la valeur logarithmique de la fréquence pour chaque voie et la valeur logarithmique de la pente associée à cette voie ;

(d) la pente de la courbe ainsi obtenue et la valeur de ladite courbe correspondant à une valeur logarithmique de fréquence égale à zéro sont déterminées.

L'invention concerne également un appareil pour la mise en oeuvre de ce procédé caractérisé en ce que :

(D) chacune desdites voies comporte un amplificateur logarithmique relié à la sortie du circuit de multiplication de la voie correspondante, ledit amplificateur fournissant au circuit de traitement comme signal de sortie de ladite voie, un signal dont la pente ne change pas en fonction du temps ;

(E) le circuit de traitement comporte des moyens destinés à effectuer les opérations suivantes :

(a) la détermination de la pente de chacun de ces n signaux de sortie de voies ;

(b) la conversion de chacune de ces n pentes sous forme logarithmique ;

(c) l'établissement d'un tableau ou d'une courbe qui donne la correspondance entre la valeur logarithmique de la fréquence pour chaque voie et la valeur logarithmique de la pente associée ;

(d) la détermination de la pente de la courbe ainsi obtenue et de la valeur de ladite courbe correspondant à une valeur logarithmique de la fréquence de voie égale à zéro ;

(F) des moyens pour mémoriser la pente et la valeur de la courbe correspondant à la valeur logarithmique de la fréquence de voie égale à zéro sont prévus.

Le procédé et la structure ainsi proposés permettent une exploitation des signaux dans différentes bandes de fréquence relativement étroites par rapport au spectre du transducteur, puis la confrontation des résultats ainsi obtenus aux fins de détermination des paramètres caractérisant le milieu exploré.

La demande de brevet européen EP-A-77585 décrit également un échographe ultrasonore permettant l'obtention d'informations quantitatives précises sur les milieux explorés, et notamment la détermination de paramètres caractéristiques de ces milieux tels que le coefficient différentiel d'atténuation ultrasonore $\beta$. Cet échographe n'opère cependant pas par analyse fréquentielle dans des bandes de fréquence distinctes couvrant le spectre, mais par étude du déplacement du centre de gravité dudit spectre de fréquences en fonction du temps.

Les particularités et avantages de l'invention apparaîtront maintenant de façon plus précise dans la description qui suit et dans les dessins annexés, donnés à titre d'exemple non limitatif et dans lesquels :

- la figure 1 montre un exemple de réalisation de l'appareil selon l'invention ;

- la figure 2 met en évidence les résultats des opérations effectuées par le circuit de traitement prévu dans l'appareil selon l'invention.

L'appareil décrit en référence à ces figures est dans le cas présent équipé d'une sonde unique constituant le support d'un transducteur ultrasonore 10 et permettant d'obtenir des échographies de type A de milieux tels que des tissus biologiques. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans le milieu à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel, également associée à un circuit de commutation du dispositif de traitement ainsi qu'à un réseau de lignes à retard ou de déphaseurs.

Le transducteur 10 est associé d'une part à un étage d'émission 20 destiné à permettre l'émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles principaux rencontrés dans leurs directions de propagation par les signaux émis (ces obstacles sont repérés sur les échogrammes par les échos de grande amplitude qui matérialisent les frontières ; entre tissus dont on cherche à déterminer les coefficients différentiels d'atténuation ultrasonore). Cette association est en général réalisée par l'intermédiaire d'un circuit de sélection alternative 40 assurant la liaison exclusive soit de l'étage d'émission, soit de l'étage de réception, avec le transducteur (un tel circuit de sélection est mentionné par exemple dans le brevet des Etats-Unis d'Amérique n° 4 139 834). Ce circuit 40 évite la dégradation des signaux émis sous l'influence des signaux de réception ou, alternativement, l'aveuglement des signaux reçus par les signaux d'émission.

Dans le mode de réalisation décrit, l'étage de réception comprend d'une part un premier circuit de traitement 100 des échos ultrasonores reçus, composé d'un premier amplificateur 101 (qui est en fait un préamplificateur), d'un dispositif de compensation de gain 102, d'un détecteur d'enveloppe 103 assurant des fonctions de redressement et de filtrage, et d'un dispositif de visualisation 104. Le transducteur 10 est relié par son électrode de sortie et par l'intermédiaire du circuit 40 à l'entrée de l'amplificateur 101, dont les signaux de sortie traversent le dispositif 102 assurant la compensation de l'amplitude des échos en fonction de la distance et le dispositif 103, puis sont visualisés sur le dispositif 104, sous la forme d'une échographie de type A, sur un axe correspondant à la direction principale de propagation du transducteur 10. L'étage de réception comprend d'autre part un deuxième circuit de traitement 200, placé en parallèle sur le premier circuit 100 et composé à son tour des éléments suivants :

(A) un deuxième amplificateur 210 recevant également le signal de sortie du transducteur 10 ;

(B) un ensemble de n voies 220a à 220n en parallèle les unes sur les autres en sortie de l'amplificateur 210, comprenant elles-mêmes chacune successivement :

(1) un filtre passe-bande 221a à 221n, l'ensemble des n filtres ainsi prévus étant tel que leurs bandes passantes respectives sont sensiblement égales et jointives pour couvrir approximativement la bande passante du transducteur ;

(2) un détecteur d'enveloppe 222a à 222n, identique dans chaque voie et comprenant un redresseur suivi d'un filtre passe-bas à constante de temps réglable de préférence à une valeur supérieure à l'intervalle de temps moyen qui sépare les échos de faible amplitude correspondant à deux centres diffuseurs adjacents, ceci afin de diminuer le bruit inhérent au milieu biologique et à ses inhomogénéités ;

(3) un circuit de multiplication 223a à 223n, qui reçoit sur une première entrée le signal de sortie du détecteur d'enveloppe correspondant et sur une deuxième entrée un signal de correction assurant la compensation de l'effet de diffraction et délivré par une mémoire 224 commandée par un circuit d'horloge 225, ledit circuit d'horloge étant lui-même déclenché par l'horloge de l'étage d'émission ;

(4) un amplificateur logarithmique 226a à 226n ;

(C) en sortie des n voies 220a à 220n, un circuit de traitement arithmétique 240 qui, à partir de leurs n signaux de sortie, procède aux opérations suivantes :

(a) la pente $\beta f_i^r$ de chacun de ces n signaux est déterminée ;

(b) ce signal $\beta f_i^r$ est converti sous forme logarithmique ;

(c) un tableau ou une courbe est établi qui donne la correspondance entre la valeur logarithmique log $f_i$ de la fréquence pour chaque voie et la valeur logarithmique log $\beta f_i^r$ ainsi déterminée en (b) ;

(d) la pente de la courbe ainsi obtenue et la valeur de log $\beta f_i^r$ pour log $f_i = 0$ constituent les paramètres qui caractérisent le milieu exploré.

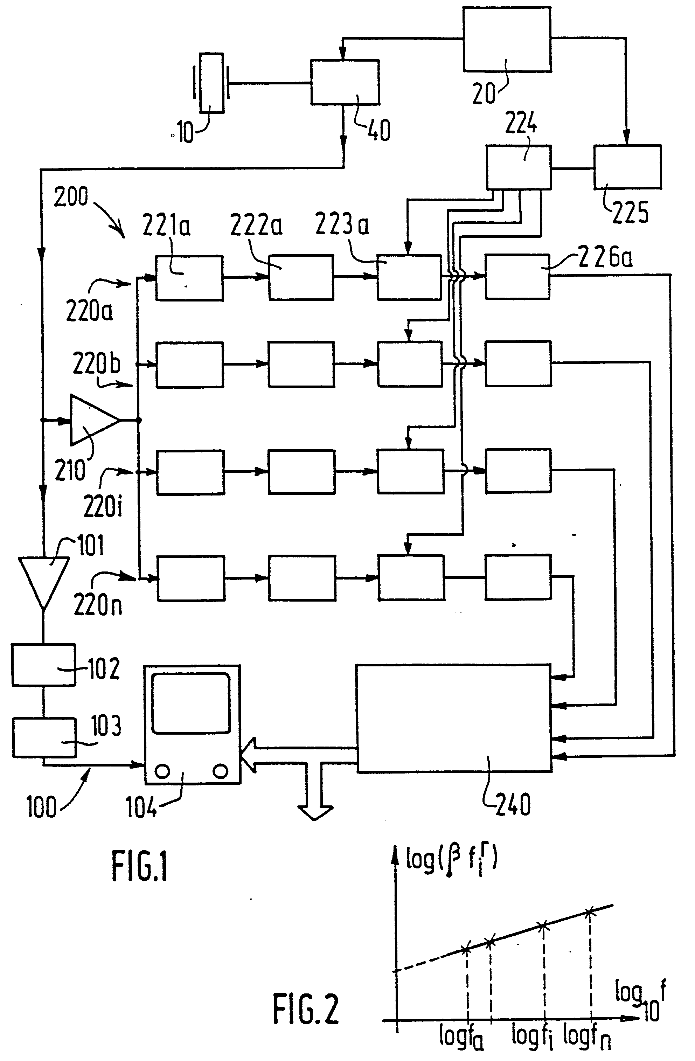

En effet, le signal de sortie des voies, de la ième voie par exemple, est proportionnel à l'expression $\beta f_i^r$ t, dans laquelle $f_i$ est la fréquence la plus représentative de la voie i considérée et r l'exposant (différent de 1) traduisant la dépendance non linéaire de l'atténuation en fonction de la fréquence. Le circuit de traitement arithmétique 240 détermine la pente $\beta f_i^r$ de chacun de ces signaux de sortie, puis opère la conversion de ces expressions sous forme logarithmique log $\beta$ + r log $f_i$ et dresse un tableau des n valeurs de cette expression logarithmique log $(\beta f_i^r)$ en fonction du logarithme de la fréquence $f_i$ (ou de façon équivalente une courbe, représentée sur la figure 2 et qui comprend n points et qui est en fait une droite dont l'ordonnée pour log $f_i = 0$ est log$\beta$ et la pente l'exposant r). Ces deux informations, constituant les deux paramètres recherchés, sont soit portées à la connaissance de l'utilisateur directement par affichage (sur le dispositif 104) ou impression, soit stockées en mémoire pour interprétation ou utilisation ultérieure.

Bien entendu, la présente invention n'est pas limitée à l'exemple de réalisation décrit, à partir duquel des variantes peuvent être proposées. En particulier, il est possible de remplacer une partie de l'étage de réception, celle située en aval de l'amplificateur 210, par les éléments suivants en série, à savoir un convertisseur analogique-numérique, un circuit de calcul de transformées de Fourier rapides pour l'exploration de la bande de fréquence effectuée précédemment par les n voies, et un circuit de traitement arithmétique semblable au circuit 240 mais incluant les corrections de diffraction, avec gestion de ces éléments par microprocesseur.

Par ailleurs, la mémoire 224 est soit une mémoire morte programmable, de type PROM par exemple, soit une mémoire à accès aléatoire, et est chargée de la façon suivante, dans le cas où le transducteur est de type focalisant. On opère la sélection d'une tranche du milieu à examiner située à l'avant de ce milieu par rapport à l'appareil et à une distance Z sur l'axe principal de propagation, le milieu intermédiaire entre cette tranche et l'appareil étant à faible atténuation, de l'eau par exemple. On détermine dans cette position le spectre énergétique du signal échographique, puis on reprend cette détermination à la même distance Z mais pour d'autres positions obtenues par déplacements perpendiculaires à l'axe principal de propagation, afin d'obtenir un spectre énergétique moyen (on effectuera par exemple une moyenne de 100 spectres autour de la même position). On répète ensuite la même détermination de spectre énergétique moyen, à d'autres distances Z entre l'appareil et le milieu à examiner mais en considérant toujours dans ce milieu la même tranche grâce à l'action d'un circuit de sélection temporelle définissant une fenêtre de temps. On calcule alors, pour toutes ces positions successives le long de l'axe Z, les valeurs de correction de diffraction, les mesures effectuées ayant en effet éliminé toute influence de l'atténuation par le choix approprié du milieu intermédiaire, et ces valeurs sont introduites dans la mémoire 224.

Dans le cas d'un transducteur non focalisant, la détermination des valeurs de correction peut être effectuée sans faire appel à une tranche du milieu à examiner, en utilisant simplement la surface réflectrice, par exemple plane ou sphérique, d'un corps de référence.

On notera enfin que, dans l'exemple décrit, l'amplificateur 210 est un amplificateur à gain fixe, mais que, si cet élément était remplacé par un circuit à contrôle automatique de gain en fonction de la distance, il faudrait immobiliser temporairement ce gain, le temps d'effectuer les mesures (un tel résultat peut être obtenu en prévoyant l'action d'une fenêtre temporelle suspendant la variation du gain entre deux instants correspondant à la tranche de tissus concernée par les mesures).

**Revendications**

1. Procédé d'exploration de milieux par échographie ultrasonore, comportant l'émission répétée de signaux ultrasonores, la réception des échos ultrasonores correspondant aux obstacles principaux rencontrés dans leur direction de propagation par les signaux émis, la séparation des signaux reçus en un nombre n de bandes de fréquence sensiblement égales et jointives pour couvrir approximativement toutes les fréquences des signaux reçus, la détermination de l'enveloppe des signaux dans chaque bande de fréquence, et la multiplication de chacun de ces signaux-enveloppes par un signal de correction pour compenser l'effet de diffraction, caractérisé en ce qu'on détermine le logarithme de chaque signal-enveloppe ainsi corrigé, lequel logarithme est une fonction linéaire du temps, après quoi, à partir des fonctions linéaires ainsi obtenues, on procède aux opérations suivantes :

(a) la pente de chacune de ces n fonctions est déterminée ;

(b) la valeur de la pente pour chaque voie est convertie sous forme logarithmique ;

(c) un tableau ou une courbe est établi pour donner la correspondance entre la valeur logarithmique de la fréquence pour chaque voie et la valeur logarithmique de la pente associée à cette voie ;

(d) la pente de la courbe ainsi obtenue et la valeur de ladite courbe correspondant à une valeur logarithmique de fréquence égale à zéro sont déterminées.

2. Procédé selon la revendication 1, caractérisé en ce que le signal de correction pour la compensation de l'effet de diffraction est obtenu après avoir réalisé les mesures suivantes : (a) opérer la sélection d'une tranche du milieu à examiner située à proximité de la zone d'émission des signaux ultrasonores et à une distance Z sur l'axe principal de propagation de ces signaux, le milieu intermédiaire entre cette tranche et ladite zone d'émission étant à faible atténuation ; (b) déterminer le spectre énergétique du signal échographique dans cette position puis à la même distance Z mais pour d'autres positions obtenues par déplacements perpendiculaires à l'axe principal de propagation afin d'obtenir un spectre énergétique moyen ; (c) répéter la même détermination de spectre énergétique moyen à d'autres distances Z entre la zone d'émission et le milieu à examiner mais en considérant toujours dans ce milieu la même tranche ; (d) calculer pour toutes ces positions successives le long de l'axe Z les valeurs de correction de diffraction.

3. Appareil d'exploration de milieux par échographie ultrasonore, comportant au moins un transducteur (10) ultrasonore associé à un étage d'émission (20) pour assurer l'émission répétée de signaux ultrasonores et à un étage de réception (100, 200) pour assurer la réception des échos ultrasonores correspondant aux obstacles principaux rencontrés dans leur direction de propagation par les signaux émis, ledit étage de réception comprenant :

(A) un amplificateur (210) recevant le signal de sortie du transducteur, ;

(B) un ensemble de n voies (220a, 220b,..., 220i,..., 220n) en parallèle les unes sur les autres en sortie de l'amplificateur, comprenant elles-mêmes chacune successivement :

(1) un filtre passe-bande (221a), l'ensemble des n filtres ainsi prévus étant tel que leurs bandes passantes respectives sont sensiblement égales et jointives pour couvrir approximativement la bande passante du transducteur ;

(2) un détecteur d'enveloppe (222a), identique dans chaque voie et comprenant un redresseur suivi d'un filtre passe-bas ;

(3) un circuit de multiplication (223a), qui reçoit sur une première entrée le signal de sortie du détecteur d'enveloppe correspondant et sur une deuxième entrée un signal de correction assurant la compensation de l'effet de diffraction et délivré par une mémoire (224) commandée par un circuit d'horloge (225), ledit circuit d'horloge étant lui-même déclenché par l'horloge de l'étage d'émission (20) ;

(C) en sortie des n voies, un circuit de traitement arithmétique (240) qui, à partir des n signaux de sortie de ces voies, fournit une information relative aux caractéristiques d'atténuation du milieu exploré ;

l'appareil étant caractérisé en ce que :

(D) chacune desdites voies (220a, 220b,..., 220i,..., 220n) comporte un amplificateur logarithmique (226a) relié à la sortie du circuit de multiplication (223a) de la voie correspondante, ledit amplificateur fournissant au circuit de traitement arithmétique, comme signal de sortie de ladite voie, un signal dont la pente ne change pas en fonction du temps ;

(E) le circuit de traitement (240) comporte des moyens destinés à effectuer les opérations suivantes :

(a) la détermination de la pente de chacun de ces n signaux de sortie de voies ;

(b) la conversion de chacune de ces n pentes sous forme logarithmique ;

(c) l'établissement d'un tableau ou d'une courbe qui donne la correspondance entre la valeur logarithmique de la fréquence pour chaque voie et la valeur logarithmique de la pente associée ;

(d) la détermination de la pente de la courbe ainsi obtenue et de la valeur de ladite courbe correspondant à une valeur logarithmique de la fréquence de voie égale à zéro ;

(F) des moyens pour mémoriser la pente et la valeur de la courbe correspondant à la valeur logarithmique de la fréquence de voie égale à zéro sont prévus.

4. Appareil selon la revendication 3, caractérisé en ce que le filtre passe-bas des détecteurs d'enveloppe est à constante de temps réglable.

**Claims**

1. A method for scanning media by ultrasonic echography, comprising the repeated transmission of ultrasonic signals, the reception of the ultrasonic echoes which correspond to the principal obstacles encoutered by the transmitted signals in their propagation direction, the splitting of the signals received into a number of n approximately equal, consecutive frequency bands in order to cover approximately all frequencies of the signals received, the determination of the envelope of the signals in each frequency band, and the multiplication of each of these signal envelopes by a correction signal in order to compensate for the diffraction effect, characterized in that the logarithm is determined of each signal envelope thus corrected, which logarithm is a linear function of time, after which the following operations are performed on the basis of linear functions thus obtained :

(a) determining the slope of each of these n functions ;

(b) converting the value of the slope for each channel into logarithmic form ;

(c) forming a table or a curve for giving the correspondence between the logarithmic value of the frequency for each channel and the logarithmic value of the slope associated with the relevant channel ;

(d) determining the slope of the curve thus obtained and the value of said curve corresponding to a logarithmic value of the frequency which is equal to zero.

2. A method as claimed in Claim 1, characterized in that the correction signal for compensating the diffraction effect is obtained after the following steps have been taken : (a) selecting a slice of the medium to be examined which is situated near the transmission zone of the ultrasonic signals and at a distance Z on the principal axis of propagation of these signals, the intermediate medium between this slice and said transmission zone having a low attenuation ; (b) determining the energy spectrum of the echographic signal in this position and subsequently at the same distance Z but for other positions which are obtained by displacements perpendicular to the principal propagation axis in order to obtain a mean energy spectrum ; (c) repeating the same determination of the mean energy spectrum with other distances Z between the transmission zone and the medium to be examined, but always for the same slice within this medium ; (d) calculating the diffraction correction values for all these successive positions along the axis Z.

3. An apparatus for scanning media by ultrasonic echography, comprising at least one ultrasonic transducer (10) which is connected to a transmitter stage (20) for the repeated transmission of ultrasonic signals and to a receiver stage (100, 200) for the reception of ultrasonic echoes corresponding to the principal obstacles encountered by the transmitted signals in their propagation direction, which receiver stage comprises :

(A) an amplifier (210) which receives the output signal of the transducer ;

(B) a set of n mutually parallel connected channels (220a, 220b,. .., 220i,. .., 220n) which are connected to the output of the amplifier and each of which successively comprises :

(1) a band-pass filter (221a), the set of n filters thus provided being such that their respective pass-bands are approximately equal and consecutive in order to cover approximately the passband of the transducer ;

(2) an envelope detector (222a) which is identical in each channel and which comprises a rectifier which is followed by a low-pass filter ;

(3) a multiplier circuit (223a), a first input of which receives the output signal of the corresponding envelope detector and a second input of which receives a correction signal in order to compensate for the diffraction effect, which correction signal is supplied by a memory (224) which is controlled by a clock circuit (225) which itself is activated by the clock of the transmitter stage (20) ;

(C) an arithmetic circuit (240) which is connected to the output of the n channels and which supplies, on the basis of the n output signals of these channels, information as regards the attenuation characteristics of the medium scanned, which apparatus is characterized in that

(D) each of said channels (220a, 220b,. .., 220i,. .., 220n) comprises a logarigthmic amplifier (226a) which is connected to the output of the multiplier circuit (223a) of the corresponding channel and which supplies the arithmetic circuit with a signal, being the output signal of said channel, whose slope does not change as a function of time ;

(E) the processing circuit (240) comprises means for performing the following operations :

(a) determining the slope of each these n channel output signals ;

(b) converting each of these n slopes into logarithmic form ;

(c) forming a table or curve for giving the correspondence between the logarithmic value of the frequency for each channel and the logarithmic value of the associated slope, ;

(d) determining the slope of the curve thus obtained and the value of said curve corresponding to a logarithmic value of the channel frequency which is equal to zero ;

(F) means are provided for storing the slope and the value of the curve corresponding to the logarithmic value of the channel frequency which is equal to zero.

4. An apparatus as claimed in Claim 3, characterized in that the low-pass filter of the envelope detectors has an adjustable time constant.

**Patentansprüche**

1. Verfahren zum Untersuchen von Medien durch UltraschallEchographie, bestehend aus der wiederholten Ausstrahlung von Ultraschallsignalen, dem Empfang von Ultraschallechos entsprechend den wichtigsten Hindernissen, denen die ausgestrahlten Signalen in ihrer Fortpflanzungsrichtung begegnen, der Aufteilung der empfangenen Signale in eine Anzahl von n im wesentlichen gleichen und zum ungefähren Umfassen aller Frequenzen der empfangenen Signalen aneinander anschließenden Frequenzbändern, der Bestimmung der Umhöllenden der Signale in jedem Frequenzband und der Multiplikation eines jeden dieser Signalumhöllenden mit einem Korrektursignal zum Ausgleichen des Brechungseinflusses, dadurch gekennzeichnet, daß der Logarithmus jeder auf diese Weise korrigierten Signalumhüllenden bestimmt wird, der eine lineare Zeitabhängigkeit aufweist, wonach ausgehend von den auf diese Weise erhaltenen linearen Funktionen folgende Schritte durchgeführt werden :

(a) von diesen n Funktionen wird die Steilheit bestimmt,

(b) für jeden Kanal wird der Steilheitswert in eine logarithmische Form umgesetzt,

(c) zum Darstellen des Zusammenhangs zwischen dem logarithmischen Wert der Frequenz für jeden Kanal und dem logarithmischen Wert der diesem Kanal zugeordneten Steilheit wird eine Tabelle oder ein Kurve angegeben,

(d) die Steilheit der auf diese Weise erhaltenen Kurve und der Wert dieser Kurve entsprechend einem logarithmischen Frequenzwert gleich Null werden bestimmt.

2. Verfahren nach Anspruch 1, dadurch gekennzeichnet, daß das Korrektursignal zum Ausgleichen des Brechungseinflusses nach der Durchführung folgender Ermittlungen erhalten wird : (a) die Wahl einer Scheibe des zu untersuchenden Mediums treffen, die sich in der Nähe der Ausstrahlungszone der Ultraschallsignale und im Abstand Z auf der Hauptachse der Fortpflanzungsrichtung dieser Signale befindet, wobei das Zwischenmittel zwischen dieser Scheibe und der Ausstrahlungszone eine geringe Schwächung herbeiführt ; (b) die Bestimmung des Energiespektrums des echographischen Signals, zunächst in dieser Position, und dann im selben Abstand Z, jedoch für andere, durch senkrechte Versetzungen in bezug auf die Hauptfortpflanzungsrichtung erhaltene Positionen zum Erhalten eines mittleren Energiespektrums ; (c) die Wiederholung derselben Bestimmung des mittleren Energiespektrums in anderen Abständen Z zwischen der Ausstrahlungszone und dem zu untersuchenden Medium, jedoch unter ständiger Berücksichtigung derselben Scheibe in diesem Medium ; (d) die Berechnung der Brechungskorrekturwerte entlang der Achse Z für all diese aufeinanderfolgenden Positionen.

3. Gerät zur Untersuchung von Medien mittels UltraschallEchographie, mit wenigstens einem Ultraschall Wandler (10), der zur Gewährleistung der wiederholten Ausstrahlung von Ultraschallsignalen einer Aussendestufe (20) und zur Gewährleistung des Empfangs der Ultraschallsignale entsprechend den in der Fortpflanzungsrichtung der ausgesandten Signale begegneten wichtigsten Hindernissen einer Empfangsstufe (100, 200) zugeordnet ist, wobei die Empfangsstufe folgende Elemente enthält :

(A) einen Verstärker (210), der das Ausgangssignal des Wandlers empfängt,

(B) eine Anzahl von n Kanälen (220a, 220b,. .., 220i, ..., 220n) in gegenseitig paralleler Anordnung am Ausgang des Verstärkers, die selbst wieder je folgende Elemente enthalten :

(1) ein Bandpaßfilter (221a), wobei die Anzahl der so angeordneten n Filter derart eingerichtet sind, daß ihre jeweiligen Paßbänder im wesentlichen gleich und zum ungefähren Umfassen des Paßbandes des Wandlers aneinander anschließbar sind,

(2) einen Umhüllungsdetektor (222a), der für jeden Kanal gleich ist und einen einem Tiefpaßfilter vorgeschalteten Gleichrichter enthält,

(3) eine Multiplikationsschaltung (223a), die an einem ersten Eingang das Ausgangssignal des entsprechenden Umhüllungsdetektors .und an einem zweiten Eingang ein Korrektursignal empfängt, das den Ausgleich des Brechungseinflusses gewährleistet und von einem durch eine Taktschaltung (225) gesteuerten Speicher (224) geliefert wird, wobei die Taktschaltung selbst durch den Takt der Aussendestufe (20) angestossen wird,

(C) eine in den Ausgängen der n Kanäle angeordnete, arithmetische Verarbeitungsschaltung (240), die eine aus den n Ausgangssignalen dieser Kanäle abgeleitete Information bezüglich der Schwächungscharakteristiken des untersuchten Mediums liefert,
dadurch gekennzeichnet, daß

(D) jeder dieser Kanäle (220a, 220b,. .., 220i,. .., 220n) einen mit dem Ausgang der Multiplikationsschaltung (223a) des entsprechenden Kanals verbundenen logarithmischen Verstärker (226a) enthält, wobei der Verstärker der arithmetischen Verarbeitungsschaltung als Ausgangssignal des Kanals ein Signal erzeugt, dessen Steilheit sich nicht zeitabhängig ändert,

(E) die Verarbeitungsschaltung (240) Mittel zum Durchführen folgender Operationen enthält :

(a) die Bestimmung der Steilheit jedes dieser n Kanalausgangssignale,

(b) die Umsetzung jeder dieser n Steilheiten in logarithmischer Form,

(c) die Abtastung einer Tabelle oder einer Kurve, die den Zusammenhang zwischen dem logarithmischen Wert der Frequenz für jeden Kanal und dem logarithmischen Wert der zugeordneten Steilheit gibt,

(d) die Bestimmung der Steilheit der so gewonnenen Kurve und des Wertes dieser Kurve, der einem logarithmischen Wert der Kanalfrequenz gleich Null entspricht,

(F) Mittel zum Speichern der Steilheit und des Wertes der Kurve entsprechend dem logarithmischen Wert der Kanalfrequenz gleich Null vorgesehen sind.

4. Gerät nach Anspruch 3, dadurch gekennzeichnet, daß das Tiefpaßfilter der Umhüllungsdetektoren auf Zeitkonstante regelbar ist.

FIG.1

FIG.2

$\log(\beta f_i^{\Gamma})$

$\log_{10} f$

$\log f_a$  $\log f_i$  $\log f_n$